# EUROPEAN PATENT APPLICATION

(11) **EP 4 674 504 A2**
(43) Date of publication of application: **07.01.2026**
(21) Application number: 25217902.3
(22) Date of filing: 20.09.2022
(51) Int. Cl.: B01D 46/64

(54) **GAS FILTER SYSTEM**

(62) Divisional of application: 22196495.0
(71) Applicant: MANN+HUMMEL GmbH, 71636 Ludwigsburg (DE)
(72) Inventor: NEEF, Pascal, 78647 Trossingen (DE); WITTMERS, Christoph, 74321 Bietigheim-Bissingen (DE); WEBER, Andreas, 71691 Freiberg (DE); STARK, Dennis, 69256 Mauer (DE); RIEGER, Mario, 71638 Ludwigsburg (DE); HANSELMANN, Markus, 74348 Lauffen (DE); PEKNY, Peter, 95339 Neuenmarkt (DE); HALLBAUER, Eva, 95502 Himmelkron (DE); SCHMID, Daniel, 74343 Sachsenheim (DE); GERLACH, Steffen, 71154 Nufringen (DE); KUPFER, Friedrich, 84163 Marklkofen (DE); HETTKAMP, Philipp, 71711 Steinheim (DE); GRAD, Johannes, 94436 Simbach (DE); PEREIRA MADEIRA, Pedro Miguel, 74321 Bietigheim-Bissingen (DE); WEISS, Dieter, 95482 Gefrees (DE)
(74) Representative: Mann + Hummel Intellectual Property

(57) **Abstract**

The invention refers to a Gas filter system (10; 10') comprising
- an outer filter element (20) having a first filter medium (22) arranged between a first end cap (24) and a second end cap (26); and
- an inner filter (30) element having a second filter medium (32) arranged between a third end cap (34) and a fourth end cap (36);
the first filter medium (22) being arrangeable to surround the second filter medium (32);
the first and third end caps (24, 34) being open;
wherein the first end cap (24) has a first sealing section (42);
wherein the third end cap (34) has an annular sealing segment (40), which protrudes radially outwardly;
and wherein the sealing segment (40) has a first sealing surface (44) for sealing abutment of the first sealing section (42) and a second sealing surface (48) for sealing abutment against a housing (12).

## Description

### Technical field

The present invention refers to a gas filter system comprising
- an outer filter element having a first filter medium arranged between a first end cap and a second end cap; and
- an inner filter element having a second filter medium arranged between a third end cap and a fourth end cap;

the first filter medium being arrangeable to surround the second filter medium;
the first and third end caps being open.

### Background

Such a filter system is known from DE 10 2018 215 603 A1.

In some applications, it is required to filter a gas flow with two filter elements. Typically, the gas flows first through a first filter element and then, the prefiltered gas flows through a second filter element. The filter elements can be arranged in a common housing. This kind of filter systems is for instance used to filter combustion air for large combustion engines, such as for trucks, construction vehicles or the like. Another application is the filtration of air for fuel cells. For such an application typically one filter element is adapted to filter particles and the other filter element is adapted to adsorb or absorb harmful gases.

DE 10 2018 215 603 A1 discloses a gas filter system with a first filter element which surrounds a second filter element. At a first axial end, open end caps of the two filter elements are associated with an outlet for clean air. At a second axial end, the first (outer) filter element has an open end cap and the second (inner) filter element has a closed end cap. The closed end cap of the inner filter element is arranged to close the opening in the end cap of the outer filter element at the second axial end. The outer filter element can have a support tube with a collar, which extends radially inwardly and covers an opening of the end cap of the outer filter element at the first axial end partially. The collar forms a contact surface for sealing abutment of the open end cap of the inner filter element.

It is an object of the invention to provide a gas filter system with improved sealing between two filter elements and a common housing for the filter elements.

This is achieved by a gas filter system according to claim 1, use of filter elements according to claim 13 and a filter element according to claim 14. Advantageous embodiments are given in the subclaims and the description.

### Disclosure of the invention

In accordance with the invention, a gas filter system is provided. The gas filter system comprises
- an outer filter element having a first filter medium arranged between a first end cap and a second end cap; and
- an inner filter element having a second filter medium arranged between a third end cap and a fourth end cap.

The first filter medium is arrangeable to surround the second filter medium. The filter media may be arranged to form a hollow-cylindrical or hollow-conical body. In particular, the filter media are arrangeable to surround a common longitudinal axis. Preferably, the filter media are arranged concentric to the common longitudinal axis for use of the filter system. Indications of directions such as radial or axial refer to the longitudinal axis. In principle, the first and third end caps are associated with a first axial end; the second and fourth end caps are associated with a second axial end. The longitudinal axis of the inner filter element and the outer filter may also be inclined relative to one another. For example, the outer filter element may be hollow-cylindrical and have its longitudinal axis in common with the filter housing, and the inner filter element may be hollow-conical wherein the fourth end cap opposing the open first and third end caps may be arranged to have its center laterally displaced relative to a center of the outer filter element or the filter housing.

During use of the gas filter system, a gas flow is typically first directed from radially outside to inside through the first filter medium of the outer filter element and then through the second filter medium of the inner filter element. Alternatively, the gas flow may first be directed through the second filter medium and then through the first filter medium.

The first and third end caps are open. The first and third end caps generally have a central opening.

According to the invention, the first end cap has a first sealing section. The first sealing section axially protrudes from the first filter medium.

Further according to the invention, the third end cap has an annular sealing segment, which protrudes radially outwardly. In particular, the sealing segment protrudes from the second filter medium over the first filter medium. In other words, the sealing segment extends radially outwardly so as to overlap the outer filter element at least partially. The invention provides, that the sealing segment has a first sealing surface for sealing abutment of the first sealing section and a second sealing surface for sealing abutment against a housing.

In a mounted state, the outer and inner filter element are sealed against each other at the first axial end by sealing abutment of the first sealing section at the first sealing surface. Furthermore, the filter elements are sealed against the housing by sealing abutment of the second sealing surface against a sealing area of the housing. Thus, the invention requires only one sealing interface towards the housing at the first axial end in order to seal both filter elements. Since sealing between the filter elements and the housing requires the two filter elements to have the appropriate sealing section or sealing segment, respectively, the gas filter system is only useable, if two suitable filter elements are present. Consequently, use of the filter system with only one filter element or with an unsuitable filter element is prevented.

At a second axial end, the filter elements may be sealed against the housing and/or each other. Preferably, both the first and the second filter elements are closed at the second end. In particular, the second and/or fourth end caps can be monolithically closed. Alternatively, a closing means, such as a closed end face of a support tube, can be sealingly attached to the second or fourth end cap.

The first sealing section can be integrally made with the first end cap. This simplifies manufacturing of the outer filter element.

Preferably, the first end cap is made of a foam, preferably polyurethane foam. A foam end cap can be directly molded to the first filter medium. This further reduces manufacturing effort. Furthermore, (polyurethane) foam has good sealing properties.

The sealing segment can be integrally made with the third end cap. This simplifies manufacturing of the inner filter element.

A second sealing section may axially protrude from the third end cap. The second sealing surface is formed on the second sealing section. The second sealing section defines a narrow rim, so that sealing contact between the housing and the sealing segment is limited to the second sealing section. This results in increased contact pressure for improved sealing performance.

In a preferred embodiment, the third end cap is made of a foam, preferably polyurethane foam. A foam end cap can be directly molded to the second filter medium. This further reduces manufacturing effort. Furthermore, (polyurethane) foam has good sealing properties.

Preferably, the gas filter system further comprises a housing, in which the inner and outer filter elements are arrangeable. In a mounted state, the filter elements are arranged inside the housing. Typically, the housing comprises a first housing part associated with the first end and a second housing part associated with the second end. An inlet may be formed at the first or second housing part. An outlet is preferably formed at the first housing part. The outlet may be in fluid communication with a clean side inside the inner filter element.

The housing has a sealing area for sealing abutment of the sealing segment of the third end cap. Typically, the sealing area is provided at the first housing part. In the mounted state, the sealing segment of the inner sealingly abuts the sealing area of the housing. To achieve this sealing abutment between the sealing segment and the sealing area, the outer filter element, namely the first sealing section of its first end cap, presses the sealing segment of the inner filter element against the housing at the sealing area.

The housing may have a central tube, which extends into the inner filter element at the third end cap in a mounted state of the filter system. The central tube provides guidance to the inner filter element and support to the second filter medium.

Preferably, an annular sealing rip is formed at the sealing area of the housing. In the mounted state, the sealing rip is pressed into the sealing segment. This results in increased contact pressure for improved sealing performance.

The housing can have an axial collar, which - in the mounted state - surrounds the first sealing section of the first end cap and the sealing segment of the third end cap. The collar provides guidance during mounting of the filter elements. Furthermore, the collar can provide support, in particular to the outer filter element, during use of the filter system. The collar may abut the first end cap in the radial and/or axial direction. Radial contact is preferably established with an axially protruding first sealing section.

The housing may have a support face for axially supporting the outer filter element at the second end cap. The support face is formed at the second axial end, preferably at the second housing part. In the mounted state, the outer filter element bears against the support face, e.g. via support legs of the second end cap. In this way, the outer filter element is urged towards the sealing area at the first axial end, whereby the sealing segment of the inner filter element is sealingly clamped between the outer filter element and the housing.

The outer filter element can have a support tube, which extends from the first end cap to the second end cap. The support tube stiffens the outer filter element, in particular in the axial direction. In the radial direction, the support tube provides support for the first filter medium. The support tube may also center the inner filter element within the outer filter element, such that an annular space between the first and second filter media is formed. The support tube can be made of rigid plastic.

Preferably, the support tube has a closed end face, which closes the outer filter element at the second end cap. In this way, the outer filter element can be conveniently sealed at the second axial end. The support tube or the end face may be partially embedded in the second end cap. The inner filter element can axially bear against the end face.

The first or the second filter medium, in particular the second filter medium of the inner filter element, can have gas-adsorbing properties and preferably contains activated carbon.

The first or the second filter medium, in particular the first filter medium of the outer filter element, can be made with cellulose.

Preferably, the filter element which is flown through first is embodied to filter particles and the filter element which is flown through second is embodied to adsorb harmful gases like NOx.

The first and/or the second filter medium may be pleated such that it comprises a plurality of pleats arranged in a zig-zag shape. The pleated media is arranged to form a circumferentially closed filter bellows that may have a cylindrical or conical shape, preferably with a circular or oval cross section.

The invention further relates to the use of a first filter element and/or a second filter element in a gas filter system according to the invention, as described above.

The invention further relates to a filter element as described above and claimed in claim 14. The filter element is a hollow filter element having a filter medium arranged between end caps, at least one of the end caps being open, wherein said open end cap has an annular sealing segment, which protrudes radially outwardly, and wherein the sealing segment has a first sealing surface for abutment of a sealing section of another filter element and a second sealing surface for sealing abutment against a housing. The two sealing surfaces are axial sealing surfaces. The first sealing surface is directed axially in direction of the other end cap. The second sealing surface is directed axially away from the filter medium. The sealing surfaces are located on opposite sides of the sealing segment. Preferably, the sealing surfaces are radially overlapping or arranged on the same circumference. Thereby, the further filter element which abuts against the first sealing surface can press the second sealing surface against the corresponding surface of the housing. The sealing segment may be one piece with the end cap. In one embodiment, end cap and sealing segment are made of an elastic material, especially foamed polyurethane. The filter element can have a conical or cylindrical shape and preferably has a circular or oval cross section.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a first embodiment of a gas filter system according to the invention, the gas filter system comprising a first filter element, a second filter element and a housing, in a schematic sectional view;
- Fig. 2: shows a first end of the filter system of Fig. 1 in an enlarged view;
- Fig. 3: shows the inner filter element of the gas filter system of Fig. 1, in a schematic sectional view;
- Fig. 4: shows a non-claimed second embodiment of a gas filter system according to the invention, in a schematic sectional view;
- Fig. 5: shows a first end of the filter system of Fig. 4 in an enlarged view;
- Fig. 6: shows a further enlarged detail of Fig. 5.

### Detailed description

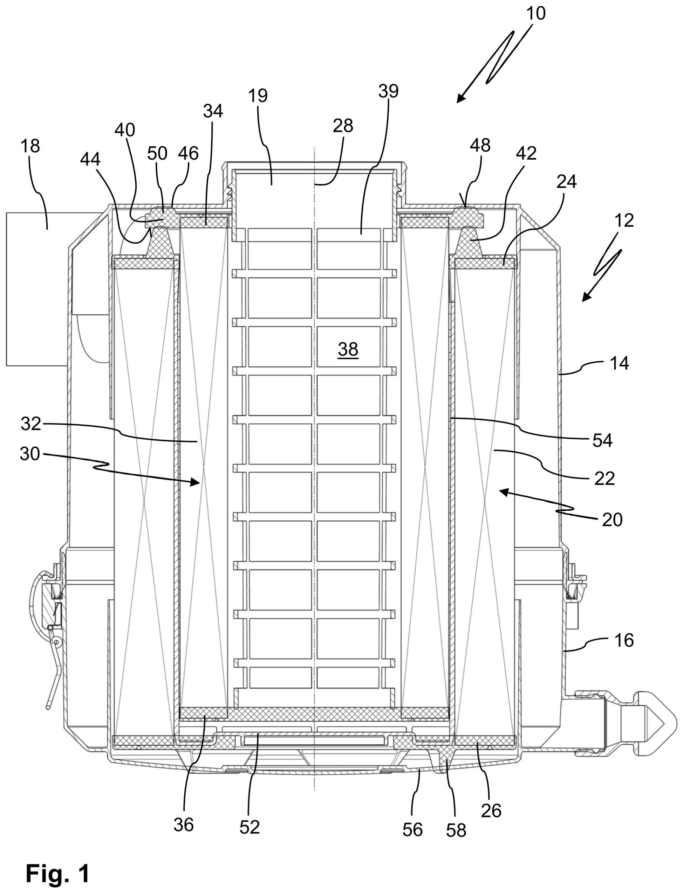

**Figure 1** shows a gas filter system **10.** The filter system 10 comprises a housing **12.** The housing has a first housing part **14** and a second housing part **16,** which are attachable to each other. An inlet **18** allows gas to enter the housing 12. Here the inlet 18 is formed at the first housing part 16. An outlet **19** for filtered gas is also formed at the first housing part 16. The housing parts 14, 16 can be made from metal and/or rigid plastic.

The filter system 10 further comprises an outer filter element **20.** The outer filter element 20 comprises a first filter medium **22.** The first medium 22 is contained between a first end cap **24** and a second end cap **26.** The first end cap 24 has a central opening. The first filter medium 22 surrounds a longitudinal axis **28** in a ciruclar manner. The first filter medium 22 can be made from pleated cellulose paper.

The filter system 10 further comprises an inner filter element **30.** The inner filter element 30 comprises a second filter medium **32.** The second medium 32 is contained between a third end cap **34** and a fourth end cap **36.** The third end cap 34 has a central opening. The second filter medium 32 also surrounds the longitudinal axis 28 in a ciruclar manner. The second filter medium 32 can contain activated carbon in order to achieve gas-adsorbing properties.

The inner filter element 30 is arranged inside the outer filter element 20. Both filter elements 20, 30 are arranged inside the housing 12. Here, the first and second filter media 22, 32 are concentric to one another and to the longitudinal axis 28.

At a first axial end, the outer and inner filter elements 20, 30 are sealed against each other and the housing 12. The outlet 19 is in fluid communication with a clean side **38** within the inner filter element 30. A central tube **39** of the housing 12 may extend from the outlet 19 through the opening of the third end cap 34 towards the fourth end cap 36.

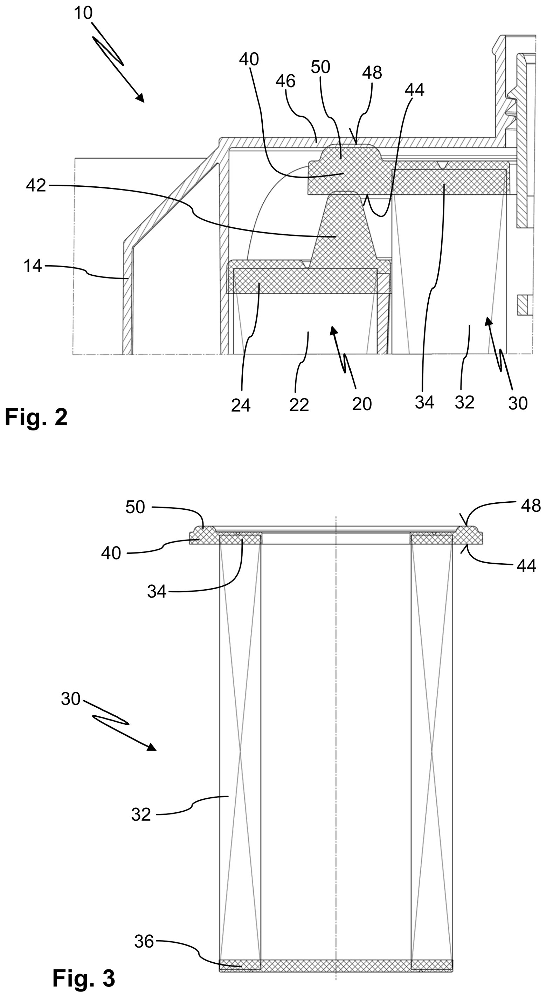

The inner filter element 30 has an annular sealing segment **40,** which protrudes radially outwardly beyond the second filter medium 32, see also **Figures 2** and **3****.** In the mounted state, the sealing segment 40 partially covers the outer filter element 20, when viewed in the axial direction, cf. Figures 1 and 2. The sealing segment 40 is integrally made with the third end cap 34. In the first embodiment, the third end cap 34 including the sealing segment 40 is a monolithic part made of polyurethane foam, which is molded to the second filter medium 32.

A first sealing section **42** axially protrudes form the first end cap 24. The first sealing section 42 is integrally made with the first end cap 24. In the depicted embodiment, the first end cap 24 including the first sealing section 42 is a monolithic part made of polyurethane foam, which is molded to the first filter medium 22.

The first sealing section 42 sealingly abuts, in the axial direction, a first sealing surface **44** of the sealing segment 40 of the inner filter element 30. Thus, axial sealing between the outer and inner filter elements 20, 30 is established at the first axial end.

The abutment of the first sealing section 42 presses the sealing segment 40 against a sealing area **46** of the housing. Here, the sealing area 46 is formed at a top wall of the first housing part 14.

Opposite to the first sealing surface 44, a second sealing surface **48** is formed at the sealing segment 40. In the first embodiment, a second sealing section **50** axially protrudes from the third end cap 34. The second sealing surface 48 is an axial face of the second sealing section 50.

At a second axial end, the outer and inner filter elements 20, 30 may be closed. In the depicted embodiment, the fourth end cap 36 of the inner filter element 30 is a monolithic closed end cap, which can be made of polyurethane foam. The outer filter element 20 is closed at the second end cap 26 by an end face **52** of a support tube **54,** see Figure 1. The support tube 54 can be made of rigid plastic and may be partially embedded in the first and second end caps 24, 26, which can be made of polyurethane foam.

At the second axial end, the outer filter element 20 rests agians a support face **56** of the housing. Here, the support face 56 is formed at a bottom wall of the second housing part 16. Support legs **58** may be provided at the second end cap 26 for bearing against the support face 56. Preferably, the support legs 58 are integrally made with the second end cap 26.

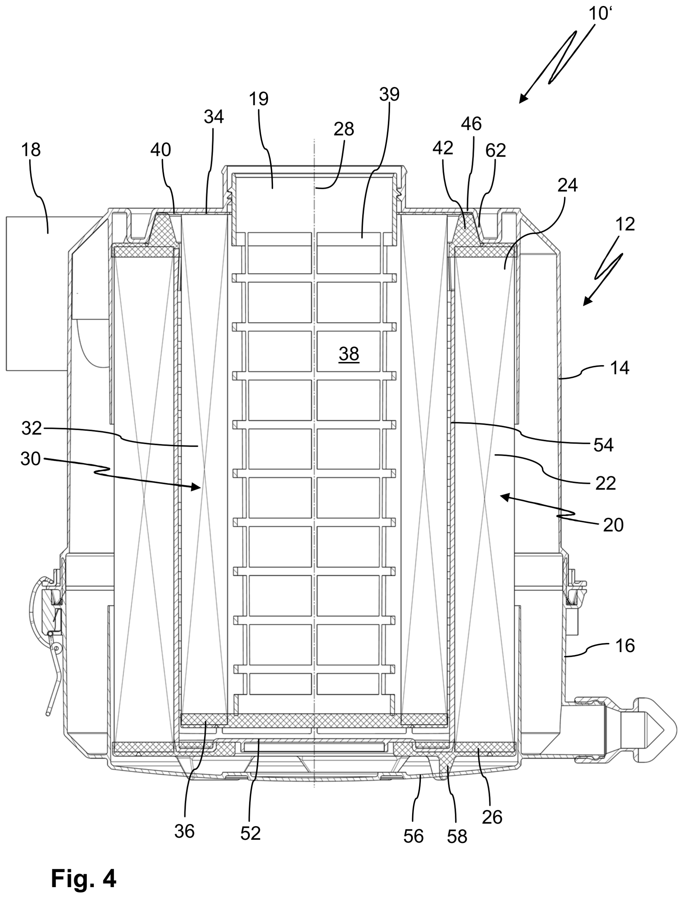

A second non-claimed embodiment of the gas filter system **10',** which is depicted in **Figures 4****,** **5** and **6****,** corresponds substantially to the first embodiment of the gas filter system 10, cf. Figures 1, 2 and 3 and the description above.

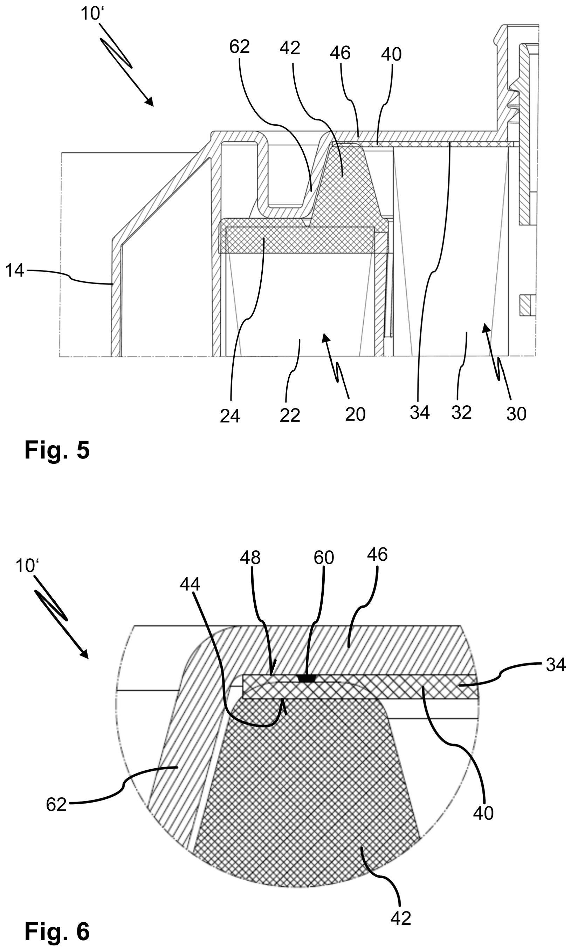

In the second embodiment, the third end cap 34 of the inner filter element 30 is made of a nonwoven fabric. The third end cap 34 is glued to the second filter medium 32. The third end cap 34 including the first and second sealing surfaces 44, 48 is flat, see in particular Figures 5 and 6.

The sealing area 46 of the housing 12 has a sealing rip **60,** see Figur 6, which protrudes in the axial direction towards the sealing segment 40 of the inner filter element 30 and the first sealing section 42 of the outer filter element 20. The sealing rip 60 is impressed into the second sealing surface 48 of the sealing segment 40 by the axial force exerted from the first sealing section 42 on the sealing segment 40.

In the second embodiment, the first sealing section 42 of the first end cap 24 and the sealing segment 40 of the third endcap 34 are surrounded by a collar **62** of the housing 12, see Figures 4 and 5. The collar 62 prodrudes in the axial direction from the first housing part 12 at its top wall. The collar provides radial guidance to the first and third end caps 24, 34. Furthermore, the collar provides an axial stop for the outer filter element 20. To this end, the collar 62 may rest against the first end cap 24 next to its first sealing section 42. The axial stop results in defined contact force between the first sealing section 42, the sealing segment 40 and the sealing area 46 of the housing 12.

### List of reference signs

Gas filter system **10; 10'**
Housing **12**
First housing part **14**
Second housing part **16**
Inlet **18**
Outlet **19**
Outer filter element **20**
First filter medium **22**
First end cap **24**
Second end cap **26**
Longitudinal axis **28**
Inner filter element **30**
Second filter medium **32**
Third end cap **34**
Fourth end cap **36**
Clean side **38**
Central tube **39**
Sealing segment **40**
First sealing section **42**
First sealing surface **44**
Sealing area **46**
Second sealing surface **48**
Second sealing section **50**
End face **52**
Support tube **54**
Support face **56**
Support legs **58**
Sealing rip **60**
Collar **62**

## Claims

1. Gas filter system (10; 10') having a longitudinal axis and comprising
- an outer filter element (20) having a first filter medium (22) arranged between a first end cap (24) and a second end cap (26); and
- an inner filter (30) element having a second filter medium (32) arranged between a third end cap (34) and a fourth end cap (36);
the first filter medium (22) being arrangeable to surround the second filter medium (32)
the first and third end caps (24, 34) being open;
wherein the first end cap (24) has a first sealing section (42), which axially protrudes from the first end cap (24);
wherein the third end cap (34) has an annular sealing segment (40), which protrudes radially outwardly;
and wherein the sealing segment (40) has a first sealing surface (44) for sealing abutment of the first sealing section (42) and a second sealing surface (48) for sealing abutment against a housing (12), which is located opposite the first sealing surface (44).

2. Gas filter system (10; 10') according to claim 1, wherein the sealing surfaces (44, 48) are radially overlapping or arranged on the same circumference.

3. Gas filter system (10; 10') according to claim 1 or 2, wherein the first sealing section (42) is integrally made with the first end cap (24).

4. Gas filter system (10; 10') according to any one of the preceding claims, wherein the first end cap (24) is made of a foam, preferably polyurethane foam.

5. Gas filter system (10; 10') according to any one of the preceding claims, wherein the sealing segment (40) is integrally made with the third end cap (34).

6. Gas filter system (10) according to any one of the preceding claims, wherein a second sealing section (50) axially protrudes from the third end cap (34).

7. Gas filter system (10) according to any one of the preceding claims, wherein the third end cap (34) is made of a foam, preferably polyurethane foam.

8. Gas filter system (10; 10') according to any one of the preceding claims further comprising a housing (12) with a first housing part (14) and a second housing part (16), in which the outer and inner filter elements (20, 30) are arrangeable, wherein the housing (12) has a sealing area (46) for sealing abutment of the sealing segment (40) of the third end cap (34), wherein the sealing area (46) is formed at a top wall of the first housing part (14), and wherein the abutment of the first sealing section (42) presses the sealing segment (40) against the sealing area (46) of the housing.

9. Gas filter system (10; 10') according to claim 8, wherein the housing (12) has a support face (56) for axially supporting the outer filter element (20) at the second end cap (26).

10. Gas filter system (10; 10') according to any one of the preceding claims, wherein the outer filter element (20) has a support tube (54), which extends from the first end cap (24) to the second end cap (26), preferably wherein the support tube (54) has a closed end face (52), which closes the outer filter element (20) at the second end cap (26).

11. Gas filter system (10; 10') according to any one of the preceding claims, wherein the first or the second filter medium (22, 32), in particular the second filter medium (32) of the inner filter element (30), has gas-adsorbing properties and preferably contains activated carbon.

12. Gas filter system (10; 10') according to any one of the preceding claims, wherein the first or the second filter medium (22, 32), in particular the first filter medium (22) of the outer filter element (20), is made with cellulose.

13. Use of an outer filter element (20) and/or an inner filter element (30) in a gas filter system (10; 10') according to any one of the preceding claims.

14. Hollow filter element (30) having a filter medium (32) arranged between end caps (34, 36), at least one of the end caps (34) being open, wherein the open end cap (34) has an annular sealing segment (40) which protrudes radially outwardly, and wherein the sealing segment (40) has a first sealing surface (44) for abutment of a sealing section of another filter element and an opposing second sealing surface (48) for sealing abutment against a housing (12).
